# EUROPÄISCHE PATENTSCHRIFT

(11) **EP 1 796 945 B1**
(45) Veröffentlichungstag und Bekanntmachung des Hinweises auf die Patenterteilung: **05.03.2008**
(21) Anmeldenummer: 05801281.6
(22) Anmeldetag: 28.09.2005
(51) Int. Cl.: B60T 8/36, B60T 8/48

(54) **VERFAHREN ZUM KALIBRIEREN DER STROM/ÖFFNUNGS-CHARAKTERISTIK EINES ELEKTRISCH ANSTEUERBAREN, ANALOG REGELNDEN HYDRAULIKVENTILS**
METHOD FOR CALIBRATING THE FLOW/OPENING CHARACTERISTICS OF AN ELECTRICALLY CONTROLLABLE, ANALOGUE REGULATING HYDRAULIC VALVE
PROCEDE POUR ETALONNER LA CARACTERISTIQUE DE COURANT/D'OUVERTURE D'UNE SOUPAPE HYDRAULIQUE A COMMANDE ELECTRIQUE ET A REGULATION ANALOGIQUE

(30) Priorität: 30.09.2004 DE 102004048199; 29.03.2005 DE 102005014097
(43) Veröffentlichungstag der Anmeldung: 20.06.2007
(73) Patentinhaber: Continental Teves AG & Co. oHG, 60488 Frankfurt am Main (DE)
(72) Erfinder: LOOS, Mirco, 66583 Elversberg (DE)
(86) Internationale Anmeldenummer: PCT/EP2005/054864
(87) Internationale Veröffentlichungsnummer: WO 2006/035036

(56) Entgegenhaltungen:
- WO-A-01/98124
- WO-A-03/026941
- DE-A1- 10 221 456

## Beschreibung

Die Erfindung betrifft ein Verfahren zum Kalibrieren der Strom/Öffnungs-Charakteristik eines elektrisch ansteuerbaren, analog regelnden Hydraulikventils, insbesondere eines Einlassventils, in einem Kraftfahrzeug-Bremsen- oder Regelungssystem, wie ABS, ASR, ESP etc., bei dem Druckmittel über ein Trennventil und über das zu kalibrierende Einlassventil zu einer Radbremse geleitet und über ein Auslassventil und eine elektrisch betriebene und elektrisch steuerbare Hydraulikpumpe zurück gefördert wird.

Ein Verfahren dieser Art ist bereits aus der DE 10221456 A1 bekannt. Nach diesem Verfahren wird der für einen Kalibriervorgang benötigte hydraulische Druck im Bremsensystem durch Betätigen der Bremse mit Hilfe einer Prüfstange aufgebaut. Das über das kurzzeitig geöffnete Einlassventil in die Radbremse geleitete Druckmittelvolumen wird über ein Auslassventil, einen Niederdruckspeicher und die Hydraulikpumpe in den Bremskreis zurückgefördert. Das zunächst geschlossene Einlassventil wird mit einer Stromrampe angesteuert. Der Öffnungsbeginn des zu kalibrierenden Einlassventils wird durch einen Druckabfall im Hauptzylinder des Bremsensystems sensiert.

Bei neueren Generationen von Hydraulikregelvorrichtungen werden so genannte Analog/Digital-Ventile, die auch als analogisierte Ventile bezeichnet werden, eingesetzt. Es handelt sich dabei um Schaltventile, welche derart konstruiert sind, dass sie sowohl analog als auch digital betrieben werden können. Ein Verfahren zur Erkennung des Schaltpunktes des Ventils, insbesondere zur Bestimmung der Druckverhältnisse aus dem Stromverlauf des Ventilansteuerstromes, ist in der EP 0 813 481 B1 beschrieben.

Im Prinzip lässt sich der durch ein derartiges elektrisch steuerbares, analog regelndes Ventil aufgebaute Druckgradient über den Spulenstrom einstellen. Allerdings ist bei solchen Ventilen zur Bestimmung der der Öffnungsstellung oder der Durchflussöffnung in Abhängigkeit von dem Ventilbetätigungsstrom und der Druckdifferenz über dem Ventil eine aufwendige Kalibrierung erforderlich. Hierzu werden, wie dies z.B. in der WO 01/98124 A1 beschrieben ist, Kennlinien für die Ventile ermittelt. Auf Basis der Kennlinien werden Sollwerte für die Ströme in Abhängigkeit vom gewünschten Druckgradienten berechnet.

Es ist aber auch vielfach üblich, in den elektronischen Bremsensteuergeräten so genannte "Default-Kennlinien" vorzusehen, welche von einem fest vorgegebenen Zusammenhang zwischen Spulenstrom und Öffnungsstellung des analog ansteuerbaren Ventils ausgehen. Diese Default-Kennlinien stellen nur Näherungswerte dar, da die bei einer Serienproduktion zwangsläufig vorhandenen Streuungen und Toleranzen nicht berücksichtigt und ausgeglichen werden. Ein elektronisches Bremsensystem, das auf den "Default"-Kennlinien der Ventile beruht, ist daher nicht in der Lage, den Druck im Radzylinder während einer ABS-Bremsung mit der gewünschten hohen Genauigkeit oder Güte zu regeln.

Die Erstellung von individuellen Kalibrierdaten oder Kennlinien für das einzelne Ventil während der Fertigung ist aufwendig und daher kostspielig. Werden die Kalibrierdaten in der zugehörigen Elektronik gespeichert, gehen diese Daten bei einem eventuell notwendigen Austausch der Elektronik verloren. Eine erneute Kalibrierung und Anpassung ist erforderlich. Auch dies ist ein schwerwiegender Nachteil.

In der am 08.12.2003 unter dem Aktenzeichen 103 57 592.8 beim Deutschen Patent- und Markenamt eingereichten Patentanmeldung ist bereits ein Verfahren zur Kalibrierung eines analog regelnden Ventils in einer Bremsenanlage, die mit Drucksensoren in den Radkreisen ausgerüstet ist, beschrieben, bei dem
- mehrere Kalibrierroutinen zum Erzeugen und Speichern von automatisch ermittelten Kalibrierdaten durchgeführt werden,
- bei dem während oder vor jeder Kalibrierroutine durch eine Hydraulikpumpe Druck in mindestens einem Drucksteuerkreis erzeugt wird und
- bei dem unter Nutzung des aufgebauten Drucks Kalibrierdaten für eines oder mehrere analog regelnde Hydraulikventile aufgenommen werden.

Durch dieses Verfahren wird es möglich, die Kalibrierung des Ventils erst nach der Produktion des Ventils oder der Bremsanlage, in der das Ventil eingebaut ist, durchzuführen. Dieses Vorgehen ist kostengünstiger als eine Erstellung von Kalibrierdaten am Band, da eine Übertragung der Kalibrierdaten in die mit dem Ventil verbundene elektronische Steuerung nicht mehr erforderlich ist. Das Verfahren setzt jedoch voraus, dass der Druck in den Bremskreisen und in den Radkreisen mittels Drucksensoren gemessen werden kann. Entsprechende Bremsanlagen sind jedoch wegen der großen Anzahl von Drucksensoren relativ aufwendig.

Der Erfindung liegt daher die Aufgabe zugrunde, ein Verfahren zum Kalibrieren der Strom/Öffnungs-Charakteristik eines elektrisch ansteuerbaren, analog regelnden Hydraulikventils, insbesondere eines Einlassventils, zu entwickeln, das mit vergleichsweise geringem Aufwand auch außerhalb des Fertigungsprozesses des Ventils und der Bremsanlage durchgeführt werden kann und das zu genauen Ergebnissen führt. Wünschenswert wäre eine Kalibrierung des Einlassventils nach dem Einbau des Ventils in die Bremsanlage, ohne dass (zusätzliche) Drucksensoren erforderlich wären.

Es hat sich gezeigt, dass diese Aufgabe durch das im Anspruch 1 beschriebene Verfahren gelöst werden kann, dessen Besonderheit in der Durchführung der folgenden Schritte besteht:
a) Sperren des Trennventils und des zu kalibrierenden Einlassventils,
b) Aufbau einer definierten Druckdifferenz über dem zu kalibrierenden Einlassventil durch Ansteuerung der Hydraulikpumpe,
c) Ansteuern des zu kalibrierenden Einlassventils mit einem Ventilöffnungssignal in Form eines vorgegebenen Ventilöffnungsstroms vorgegebener Dauer,
d) Ermitteln des infolge des Ventilöffnungssignals in die Radbremse geflossenen Druckmittelvolumens durch Ansteuerung der Hydraulikpumpe und Rückförderung des Druckmittelvolumens aus der Radbremse in den Bremskreis und
e) Ermitteln der Durchflussöffnung des zu kalibrierenden Ventils in Abhängigkeit von dem jeweiligen Ventilöffnungssignals durch Bestimmung und Auswertung des zurück geförderten Druckmittelvolumens;

Nach einem Ausführungsbeispiel der Erfindung wird zum Aufbau der Druckdifferenz über dem zu kalibrierenden Einlassventil bzw. zum Aufbau des Systemdrucks das Trennventil mit einem Druckbegrenzungsstrom angesteuert, der dem gewünschten Systemdruck vor dem Einlassventil entspricht.

Durch die vorgenannten Maßnahmen wird es möglich, den Kalibrierungsvorgang ohne zu Hilfenahme von Drucksensoren oder sonstiger zusätzlicher Sensorik oder Hardware durchzuführen.

Das Einlassventil wird zweckmäßiger Weise nach dem Einbau des Ventils in das Hydraulikaggregat kalibriert. Einer Wiederholung des Kalibriervorgangs in der Werkstatt oder in Abhängigkeit von regelmäßig wiederkehrenden Ereignissen steht grundsätzlich nichts im Wege. Der Kalibriervorgang könnte auch automatisch bei jedem Zündungslauf gestartet werden.

Nach einem vorteilhaften Ausführungsbeispiel der Erfindung werden die Schritte a) bis e) in aufeinander folgenden Messroutinen mit gleichen und/oder mit variablen Ventilöffnungssignalen wiederholt, um vollständige Kennlinien oder Kennlinienscharen in Abhängigkeit von vorgegebenen Parametern zu erhalten. Auch lässt sich grundsätzlich durch die Wiederholung von Messungen oder von Messroutinen - und Mittelwertbildung - eine Verbesserung der Messgenauigkeit oder eine Überprüfung der Messergebnissen durch Redundanz erreichen.

Ferner hat es sich als vorteilhaft erwiesen, nach Beendigung jedes Ventilöffnungssignals das zurück geförderte Druckmittelvolumen zu ermitteln und zum Bestimmen der Durchflussöffnung des zu kalibrierenden Einlassventils auszuwerten. Dabei kann in den aufeinander folgenden Messroutinen der Ventilöffnungsstrom des zu kalibrierende Einlassventils schrittweise oder in Stufen erhöht werden.

Handelt es sich bei dem zu kalibrierende Einlassventil um ein stromlos offenes Ventil (SO-Ventil), wird das Ventil in dem Schritt a) des Kalibriervorgangs mit einem Schließstrom in der Größenordnung von 1800 mA beaufschlagt und als Ventilöffnungssignal ein den Schließstrom mindernder Ventilöffnungsstrom angelegt. Der Ventilschließstrom wird in den aufeinander folgenden Messroutinen jeweils um einen vorgegebenen Wert von z.B. 10mA verringert. Auf diese Weise erhält man um eine ausreichende Anzahl von Messpunkten zur genauen Bestimmung der Strom/Öffnungs-Charakteristik des zu kalibrierenden Ventils.

Der Hydraulikdruck am Eingang des zu kalibrierenden Einlassventils wird nach einem weiteren Ausführungsbeispiel der Erfindung durch Ansteuerung der Hydraulikpumpe bis zu einem Überströmen des Trennventils oder bis zum Ansprechen eines anderen Druck begrenzenden Elementes vorgegeben.

Damit der Hydraulikdruck am Eingang des zu kalibrierenden Einlassventils während eines Kalibriervorgangs weitgehend konstant bleibt, ist es vorteilhaft, den Hydraulikdruck durch Anschluss eines Druckspeicherkreises zu puffern. Handelt es sich um eines der heutigen Bremssysteme, bei denen zwei Radbremsen über individuelle Einlassventile und über ein gemeinsames Trennventil an einen Bremskreis angeschlossen sind, lässt sich der Druckspeicherkreis sehr einfach durch Öffnen des Druckmittelweges bzw. des Einlassventils, das zu der zweiten Radbremse führt, realisieren.

Das Volumen des zurück geförderten Druckmittels wird im Rahmen des erfindungsgemäßen Verfahrens zweckmäßiger Weise durch Beobachtung des Förderverhaltens der Hydraulikpumpe, insbesondere des Strom/Spannungsverlaufs am Elektromotor der Pumpe, bestimmt.

Weitere Merkmale, Vorteile und Einzelheiten der Erfindung gehen aus der folgenden Beschreibung von Ausführungsbeispielen der Erfindung anhand der beigefügten Darstellungen und Diagramme hervor. Es zeigen
- Fig. 1: in schematisch vereinfachter Darstellungsweise wichtige Komponenten und die hydraulische Schaltung eines Bremsensystems zur Durchführung des erfindungsgemäßen Verfahrens,
- Fig. 2: a) und b) in Diagrammen ein Beispiel für den Verlauf des Ventilbetätigungsstroms und des von der Hydraulikpumpe geförderten Druckmittelvolumens während eines Kalibriervorgangs, und
- Fig. 3: a) und b) Kennlinien zur Veranschaulichung des Ventilbetätigungsstromes in Abhängigkeit von dem Differenzdruck am Ventil.

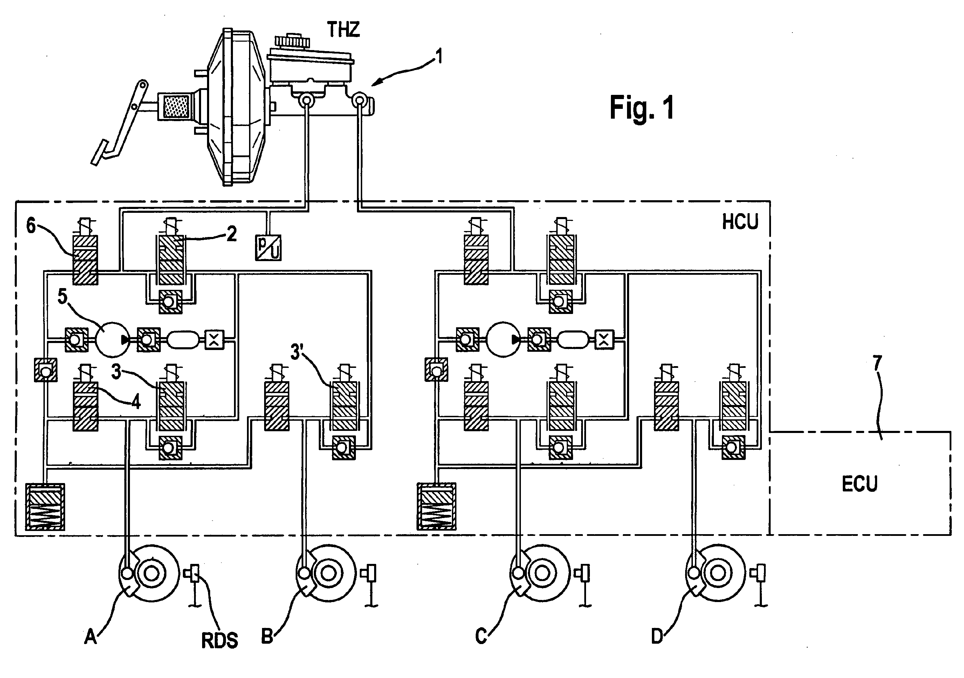

In Fig. 1 sind die wichtigsten hydraulischen Komponenten eines Bremsensystems dargestellt, das in Verbindung mit einem geeigneten elektronischen Datenverarbeitungs- und Steuerungssystem ECU und einer nicht dargestellten Sensorik (in Fig. 1 sind lediglich Raddrehzahlsensoren RDS angedeutet) zur Blockierschutzregelung (ABS), Antriebsschlupfregelung (ASR), Fahrstabilitätsregelung (ESP) etc. eingesetzt werden kann.

Zur Bremskrafterzeugung wird in dem Beispiel nach Fig.1 ein pedalbetätigter Bremsdruckgeber 1, hier ein zweikreisiger Hauptzylinder (THZ) mit vorgeschaltetem Servo-Aggregat, verwendet. An die beiden Bremskreise I, II des Hauptzylinders sind jeweils zwei Radbremsen A,B; C,D angeschlossen. Jeder Bremskreis enthält eine elektrisch betriebene und elektrisch steuerbare Hydraulikpumpe 5, die als fremdkraftgespeiste Druckmittelquelle dient. Die Komponenten und die hydraulische Schaltung der beiden Bremskreise I, II sind identisch.

In jedem der beiden Bremskreise I,II sind die Radbremsen A, B; C,D radindividuell über analog steuerbare oder analogisierte Einlassventile 3 und über ein - je Bremskreis - gemeinsames Trennventil 2 mit dem Bremsdruckgeber 1 hydraulisch verbunden. Außerdem ist jede Radbremse A,B; C,D über ein Auslassventil 4 und einen Niederdruckspeicher NDS mit der Saugseite der Hydraulikpumpe 5 und über ein stromlos gesperrten Schaltventil 6 (SG-Ventil) mit dem Bremsdruckgeber 1 verbunden; über das Ventil 6 kann die Hydraulikpumpe 5 bei Bedarf, z.B. im Rahmen eines bestimmten Antriebsschlupf- oder eines Fahrstabilitätsregelungsvorgangs, Druckmittel aus dem Hauptzylinder ansaugen. Pro Bremskreis werden nur ein Niederdruckspeicher NDS und eine Hydraulikpumpe 5 benötigt.

Die in Fig. 1 wiedergegebenen Hydraulikventile 2, 3, 4 und 6 werden elektrisch gesteuert. Die Auslassventile 4 und die stromlos gesperrten Ventile 6 sind vorzugsweise reine Schaltventile. Das stromlos offene Trennventil 2 ist im vorliegenden Beispiel ein analoges oder analogisiertes Ventil, das bereits vor Einbau in das Bremsensystem kalibriert wurde. Dem Trennventil 2 ist ein Überströmventil parallel geschaltet, oder es besitzt eine Überströmfunktion, die bewirkt, dass bei geschlossenen Trennventil 2 und drucklosem Bremsdruckgeber 1 der Druck am Trennventil auf einen vorgegebenen Maximalwert von z.B. 130 oder 150 bar begrenzt wird.

Die generelle Arbeitsweise eines Bremsensystems der in Fig. 1 dargestellten Art ist bekannt. Neu ist dagegen das Kalibrieren des analog regelnden Einlassventils 3 durch Ausführung des erfindungsgemäßen Verfahrens.

Die Einlassventile 3 werden nach Einbau in das zuvor beschriebenen Bremsensystem (siehe Fig. 1) nacheinander kalibriert. Hierzu wird bei drucklosem Bremsdruckgeber 1, nach dem Schließen des Trennventils 2 und des zu kalibrierenden Einlassventils 3, durch Ansteuern der Hydraulikpumpe 5 ein definierter Druck am Ventil 3 aufgebaut. Bei dem hier beschriebenen Ausführungsbeispiel der Erfindung wird dieser System- und Differenzdruck durch die Überströmfunktion des Trennventils 2 auf den vorgegebenen Wert, der in der Größenordnung von z.B. 130 bis 150bar liegt, begrenzt. Durch Öffnen oder Offenhalten des Druckmittelwegs, der über das zweite Einlassventil 3' zu der zweiten Radbremse B desselben Bremskreises I führt, wird im vorliegenden Ausführungsbeispiel ein Druckspeicherkreis gebildet, der den Systemdruck, nämlich den Druck an dem zu kalibrierenden Einlassventil 3, während des Kalibriervorgangs puffert.

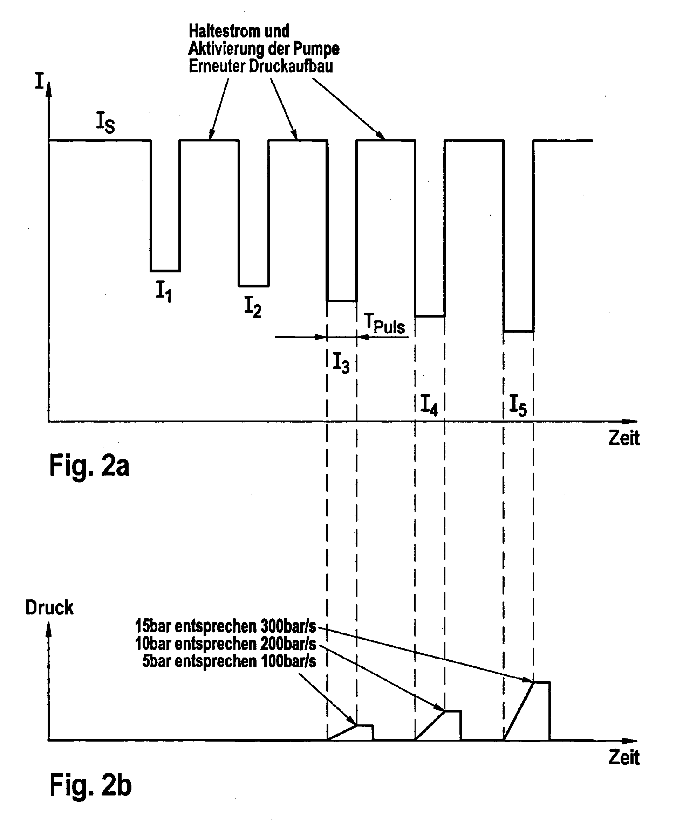

Der nächste Schritt (Schritt c) des Kalibrierungsvorgangs besteht nun darin, dass durch kurzzeitiges Anlegen eines definierten Ventilöffnungssignals an das zu kalibrierende Einlassventil 3 eine definiertes Öffnen des Ventils 3 und dadurch ein Druckmittelabfluss in die Radbremse A herbeigeführt wird. Dies veranschaulicht das Diagramm nach Fig. 2a, in dem mit Iₛ der zuvor (im Schritt a) zum Schließen des stromlos offenen Einlassventils 3 angelegte Schließstrom und mit I₁, I₂, I₃, I₄, I₅ der schrittweise erhöhte Ventilöffnungsstrom, der dem Schließstrom Iₛ entgegengerichtet ist, bezeichnet sind; der Ventilschließstrom wird also hier schrittweise reduziert. Das Einlassventil 3 wird mit den Ventilöffnungssignalen bzw. Ventilöffnungsströmen I₁, I₂, I₃, I₄, I₅ in Form vom Pulsen der Dauer T_{Puls} beaufschlagt, wie ebenfalls der Fig. 2a zu entnehmen ist. Nach den Zeitspannen T_{Puls} wird das Einlassventil 3 durch Anlegen des Schließstroms Iₛ wieder vollständig geschlossen, das Auslassventil 4 dagegen geöffnet und die Hydraulikpumpe 5 aktiviert. Das über das Einlassventil 3 in die Radbremse A und von dort über das Auslassventil 4 in den Niederdruckspeicher NDS verschobene Druckmittelvolumen wird mit Hilfe der Pumpe 5 in den Bremskreis zurück gefördert. Das elektrische Umschaltventil 6 (SG-Ventil) ist während des Kalibriervorgangs stromlos und somit gesperrt.

Das Fördervolumen über die Hydraulikpumpe 5 infolge der Ventilöffnungsströme I₁, I₂, I₃, I₄, I₅ ist in Fig. 2b graphisch dargestellt. Die dem Schließstrom Iₛ entgegen gerichteten Ventilöffnungsströme I₁, I₂, I₃, I₄, I₅ werden im Beispiel nach Fig. 2 schrittweise um jeweils 10mA erhöht, der Ventilschließstrom somit schrittweise reduziert. In den ersten beiden Schritten reicht der Öffnungsstrom I₁, I₂ zum Öffnen des Einlassventils 3 noch nicht aus. Erst im Schritt I₃ fließt Druckmittel über das ein wenig geöffnete Einlassventil 3 und wird durch die Hydraulikpumpe 5 zurückgefördert. In Abhängigkeit von dem schrittweise reduzierten Ventilschließstrom I₃, I₄, I₅ wird im vorliegenden Ausführungsbeispiel der Erfindung ein Druckmittelfluss durch das Einlassventil 3 mit einem Gradienten von 100bar/s bis 300bar/s erreicht; dies veranschaulicht Fig. 2b.

Dargestellt ist in Fig. 2b der prinzipielle Druckverlauf im Radzylinder der Radbremse A, der sich durch das pulsweise Öffnen des Einlassventils 3 infolge der Ventilöffnungssignale oder Ventilöffnungsströme I₃, I₄, I₅ einstellt. Dieser Druckverlauf wird erfindungsgemäß durch Beobachtung des Förderverhaltens der Hydraulikpumpe 5 bestimmt; aus dem Strom/Spannungsverlauf an den Klemmen der Pumpe 5 ist bekanntlich erkennbar, ob die Pumpe 5 leer läuft oder Druckmittel fördert; die Stromaufnahme und/oder die Drehzahl der Pumpe 5 lassen Rückschlüsse auf das Fördervolumen und auf den Druckgradienten zu, da der Systemdruck, gegen den die Pumpe 5 während des Kalibrierungsvorgangs fördert, durch das Überströmen des Trennventils 2 vorgegeben ist. Durch die Auswertung des Verhaltens der Pumpe 5 zur Bestimmung des Fördervolumens der Pumpe und damit zur indirekten Ermittlung des Druckverlaufs an der Radbremse A und/oder des Fördervolumens wird der Verzicht auf Druckmesselemente, d.h. Drucksensoren, im Bereich der Radbremsen ermöglicht.

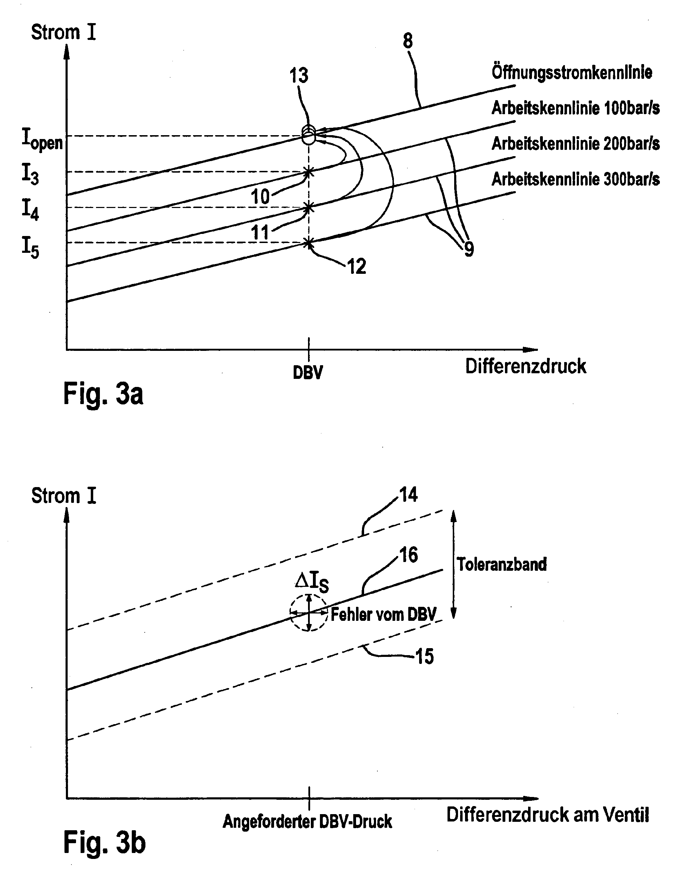

Fig. 3a zeigt den Zusammenhang zwischen der Öffnungsstromkennlinie und den Arbeitsstrom- bzw. Haltestromkennlinien. Auf der X-Achse ist der Differenzdruck am Einlassventil 3, auf der Y-Achse der Ventilöffnungsstrom durch die Spule des Einlassventils 3 aufgetragen. Die Öffnungsstromkennlinie ist mit 8 benannt. Mit 9 sind die Arbeitsstromkennlinien für verschiedene Druckgradienten (100bar/s, 200bar/s und 300 bar/s) bezeichnet. Die Haltestromkennlinie 8 gibt das Verhalten des Ventils wieder, wenn der Zustand des Kräftegleichgewichts am Ventilstößel herrscht. In diesem Fall ist der Druckgradient gleich null. Damit sich ein Durchfluss einstellt, muss der Strom Iₒₚₑₙ in Richtung zu I₃ verringert werden. Da im vorliegenden Beispiel das Einlassventil 3 ein stromlos offenes Ventil (SO-Ventil) ist und folglich der Ventilöffnungsstrom dem Ventilschließstrom entgegengerichtet ist, wird der Durchfluss durch das Einlassventil 3 durch Erhöhung der Stromabsenkung, d.h. Verringerung des Ventilstroms I, vergrößert.

Punkt DBV bezeichnet den System- oder Differenzdruck, welcher durch das Überströmen am Trennventil 2 vorgegeben ist. Dieser Punkt wird während eines Kalibriervorgangs durch Offenhalten des zweiten Einlassventils 3', das zu der Radbremse B führt, gepuffert. Dennoch kann der Druck DBV in der Praxis von Messung zu Messung etwas variieren.

Zusammenfassend wird nun ein Kalibrierungsvorgang mit Bezug auf die Figuren 1 bis 3 erläutert:

An den Bremskreis I in Fig. 1 sind die Radbremsen A und B angeschlossen. Es soll zunächst das Einlassventil 3, das zur Radbremse A führt, kalibriert werden. Radbremse B dient als Puffer oder Druckspeicher für die Kalibrierung des Einlassventils 3. Folgende Schritte werden durchgeführt:
1. Durch Schließen der Ventile 2, 3 und Aktivieren der Pumpe 5 wird der Systemdruck aufgebaut. Es stellt sich ein definierter Differenzdruck DBV von z.B. 130 bar an dem zu kalibrierenden Einlassventil 3 ein.
2. Das Einlassventil 3 wird mit schrittweise erhöhtem Ventilöffnungsstrom, d.h. schrittweise reduziertem Ventilschließstrom, siehe Fig. 2a, angesteuert.
3. Über das Auslassventil 4 wird über das Druckmittel in dem Bremskreis zurückgefördert. Den aus dem Beobachten der Pumpe 5 ermittelten Druckverlauf zeigt Fig. 2a.
4. Aus dem geförderten Volumen ergeben sich Rückschlüsse auf die Ventilstellung bzw. auf die jeweilige Durchflussöffnung des Einlassventils 3 in Abhängigkeit vom der Bestromung des Ventils und der Druckdifferenz (siehe Fig. 3a). Aufgrund der Korrelation zwischen der Arbeitstromkennlinie 8 und den Öffnungsstromkennlinien 9 kann aus den Messwerten und den daraus abgeleiteten Arbeitstellungen des Ventils ein Öffnungsstrom geschätzt werden.

Wie Fig. 3a veranschaulicht, ergibt sich zunächst für den Strom I₃ ein Messpunkt 10. Dieser Messpunkt 10 markiert den Arbeitspunkt bei einem Druckgradienten von etwa 100 bar/s und dem durch das Druckbegrenzungsventil vorgegebenen Systemdruck DBV. Über eine im elektronischen Steuergerät ECU 7 abgelegte Tabelle wird von diesem Arbeitspunkt oder Messpunkt 10 auf den Ventilöffnungsstrom Iₒₚₑₙ geschlossen; Iₒₚₑₙ ist gewissermaßen der für eine Minimalöffnung erforderliche Stromwert. Diese Berechnung führt zu dem Arbeitpunkt 13 in Fig. 3a.

Entsprechende Berechnungen werden auf Basis der Messpunkte 11 und 12 wiederholt. Diese Messpunkte resultieren aus den Ventilöffnungssignalen I₄ und I₅ und dem dadurch hervorgerufenen Druckmittelfluss mit den Druckgradienten von ca. 200 bar/s bzw. 300 bar/s. Auch diese Messpunkte erlauben Rückschlüsse auf den Arbeits- oder Öffnungspunkt 13 des zu kalibrierenden Einlassventils 3. Dies wird durch in Fig. 3a von den Messpunkten 10,11,12 zu dem Arbeits- oder Öffnungspunkt 13 weisenden Pfeile symbolisiert.

In der Praxis wird auf Basis der Messpunkte 10,11,12 ein Mittelwert gebildet, welcher dann anstelle der Einzelwerte für die Kalibrierung des Einlassventils 3 herangezogen wird.

Durch die unterschiedlichen Druckaufbauvorgänge bei Durchführung des erfindungsgemäßen Verfahrens werden im Ergebnis verschiedene Arbeitsbereiche des Einlassventils 3 erfasst. Aus den unterschiedlichen Arbeitskennlinien kann jeweils ein Öffnungsstrom und Arbeitspunkt ermittelt oder geschätzt werden. Am Ende liefert eine Mittelwertbildung auf Basis der auf diesem Weg ermittelten Öffnungspunkte einen vergleichsweise genauen Wert für den Öffnungspunkt 13 bei dem in Schritt 1 des Kalibrierungsverfahrens eingestellten Systemdruck DBV und der entsprechenden Druckdifferenz am Ventil.

Die Stromwerte liegen bei den Ventilen einer Produktionsreihe üblicher Weise zwischen einer oberen und einer unteren Toleranzlinie 14 bzw.15; dies veranschaulicht Fig. 3b. Die beiden Toleranzlinien 14, 15 bilden ein Toleranzband. Der Mittelwert ist mit 16 bezeichnet. Es ist deshalb möglich, für die näherungsweise Berechnung bestimmte sinnvolle Stromwerte und Gradiententabellen für die Arbeitsstromberechnung im Steuergerät ECU 7 fest vorzugeben.

Die Genauigkeit der Kalibrierergebnisse kann bei Anwendung des erfindungsgemäßen Verfahrens sehr leicht durch Wiederholung der Messungen und Berechnungen, durch Variieren der Parameter etc. erhöht werden, da die Vorgänge nicht an den Herstellungsprozess gekoppelt sind und ohne zusätzliche Hardware ausgeführt werden können. Bei Bedarf lässt sich die Ventilkalibrierung in der Werkstatt wiederholen. Es ist durchaus auch möglich, eine automatische Kalibrierung im Fahrzeug vorzusehen, die z.B. durch regelmäßig wiederkehrende Ereignisse, wie Starten des Fahrzeugs etc., ausgelöst werden kann.

Es bleibt noch nachzutragen, dass das erfindungsgemäße Verfahren, das vorstehend anhand der Kalibrierung von SO-Ventilen beschrieben wurde, gleichermaßen zum Kalibrieren von analog regelnden, stromlos geschlossenen Ventilen geeignet ist.

Weiterhin ist es auch möglich, mit dem beschriebenen Verfahren die ordnungsgemäße Funktion eines Bremsenaggregates der in Fig. 1 dargestellten Art, insbesondere die Funktion der Hydraulikventile, zu überprüfen.

Schließlich ist noch festzuhalten, dass nach dem Kalibrieren des Einlassventils 3 das Einlassventil 3', das ebenfalls an der Pumpe 5 angeschlossen ist, in gleicher Weise wie zuvor das Ventil 3 kalibriert wird, wobei nun durch Offenhalten des Ventils 3 der Systemdruck am Eingang des Ventils 3' gepuffert wird.

## Patentansprüche

1. Verfahren zum Kalibrieren der Strom/Öffnungs-Charakteristik eines elektrisch ansteuerbaren, analog regelnden Hydraulikventils, insbesondere eines Einlassventils (3), in einem Kraftfahrzeug-Bremsen- oder Regelungssystem, wie ABS, ASR, ESP etc., bei dem Druckmittel über ein Trennventil (2) und über das zu kalibrierende Einlassventil (3) zu einer Radbremse (A) geleitet und über ein Auslassventil (4) und eine elektrisch betriebene und elektrisch steuerbare Hydraulikpumpe (5) zurück gefördert wird, **gekennzeichnet durch** die Schritte:
a) Sperren des Trennventils (2) und des zu kalibrierenden Einlassventils (3),
b) Aufbau einer definierten Druckdifferenz über dem zu kalibrierenden Einlassventil (3) **durch** Ansteuerung der Hydraulikpumpe (5),
c) Ansteuern des zu kalibrierenden Einlassventils (3) mit einem Ventilöffnungssignal in Form eines vorgegebenen Ventilöffnungsstroms (I₁, I₂, I₃, I₄, I₅) vorgegebener Dauer (T_{Puls}),
d) Ermitteln des infolge des Ventilöffnungssignals in die Radbremse (A) geflossenen Druckmittelvolumens **durch** Ansteuerung der Hydraulikpumpe (5) und Rückförderung des Druckmittelvolumens aus der Radbremse (A) in den Bremskreis und) Ermitteln der Durchflussöffnung des zu kalibrierenden Einlassventils (3) in Abhängigkeit von dem jeweiligen Ventilöffnungssignals **durch** Bestimmung und Auswertung des zurück geförderten Druckmittelvolumens.

2. Verfahren nach Anspruch 1, **dadurch gekennzeichnet, dass** zum Bestimmen der Strom/Öffnungs-Charakteristik des zu kalibrierenden Einlassventils (3) die Schritte a) bis e) in aufeinander folgenden Messroutinen mit gleichen und/oder mit variablen Ventilöffnungssignalen (I₁, I₂, I₃, I₄, I₅) wiederholt werden.

3. Verfahren nach Anspruch 2, **dadurch gekennzeichnet, dass** nach Beendigung jedes Ventilöffnungssignals das zurück geförderte Druckmittelvolumen ermittelt und zum Bestimmen der Durchflussöffnung des zu kalibrierenden Einlassventils (3) ausgewertet wird.

4. Verfahren nach Anspruch 2 oder 3, **dadurch gekennzeichnet, dass** in den aufeinander folgenden Messroutinen der Ventilöffnungsstrom des zu kalibrierende Einlassventils (3) schrittweise oder in Stufen erhöht wird.

5. Verfahren nach Anspruch 4, **dadurch gekennzeichnet, dass** als zu kalibrierende Einlassventil (3) ein stromlos offenes Ventil (SO-Ventil) verwendet wird, das in dem Schritt a) des Kalibriervorgangs mit einem Schließstrom in der Größenordnung von 1800 mA beaufschlagt wird, und dass als Ventilöffnungssignal ein den Schließstrom (Iₛ) mindernder Ventilöffnungsstrom (I₁, I₂, I₃, I₄, I₅) angelegt wird, der in den aufeinander folgenden Messroutinen jeweils um einen vorgegebenen Wert von z.B. 10mA erhöht wird.

6. Verfahren nach Anspruch einem oder mehreren der Ansprüche 1 bis 5, **dadurch gekennzeichnet, dass** der Hydraulikdruck am Eingang des zu kalibrierenden Einlassventils (3) durch Ansteuerung der Hydraulikpumpe (1) bis zu einem Überströmen des Trennventils (2) oder bis zum Ansprechen eines anderen Druck begrenzenden Elementes vorgegeben wird.

7. Verfahren nach Anspruch 6, **dadurch gekennzeichnet, dass** der Hydraulikdruck am Eingang des zu kalibrierenden Einlassventils (3) während eines Kalibriervorgangs durch Anschluss eines Druckspeicherkreises gepuffert wird.

8. Verfahren nach Anspruch 7, **dadurch gekennzeichnet, dass** bei einem Bremsensystem, bei dem zwei oder mehrere Radbremsen (A, B) über individuelle Einlassventile (3, 3') und über ein gemeinsames Trennventil (2) an einen Bremskreis (I) angeschlossen sind, der Druckspeicherkreis durch Öffnen des Druckmittelweges zu einer zweiten Radbremse (B) gebildet wird.

9. Verfahren nach einem oder mehreren der Ansprüche 1 bis 8, **dadurch gekennzeichnet, dass** das Volumen des zurück geförderten Druckmittels durch Beobachtung des Förderverhaltens der Hydraulikpumpe (5), insbesondere des Strom/Spannungsverlaufs, bestimmt wird.

10. Verfahren nach einem oder mehreren der Ansprüche 1 bis 9, **dadurch gekennzeichnet, dass** zur Ermittlung der Kalibrierdaten mehrere Messwerte und/oder mehrere Messroutinen zum Zwecke der Genauigkeitsverbesserung oder zu einer redundanten Signalauswertung berücksichtigt werden.

## Claims

1. Method for calibrating the current/opening characteristics of an electrically controllable, analog regulating hydraulic valve, in particular an inlet valve (3), in a motor vehicle brake or control system such as ABS, TCS, ESP, etc., wherein pressure fluid is conducted to a wheel brake (A) by way of a separating valve (2) and by way of the inlet valve (3) being calibrated, and is returned by way of an outlet valve (4) and an electrically operated and electrically controllable hydraulic pump (5),
**characterized by** the following steps:
a) closing the separating valve (2) and the inlet valve (3) being calibrated,
b) developing a defined difference in pressure across the inlet valve (3) being calibrated by actuation of the hydraulic pump (5),
c) actuating the inlet valve (3) being calibrated by means of a valve opening signal in the form of a predetermined valve opening current (I₁, I₂, I₃, I₄, I₅) of a predefined duration (T_{Puls}),
d) determining the pressure fluid volume which propagated into the wheel brake (A) in response to the valve opening signal by way of actuation of the hydraulic pump (5) and return delivery of the pressure fluid volume from the wheel brake (A) into the brake circuit, and
e) determining the effective area of flow of the inlet valve (3) being calibrated depending on the respective valve opening signal by defining and evaluating the pressure fluid volume returned.

2. Method as claimed in claim 1,
**characterized in that** the steps a) to e) are repeated in consecutive measuring routines with equal and/or with variable valve opening signals (I₁, I₂, I₃, I₄, I₅) in order to determine the current/opening characteristics of the inlet valve (3) being calibrated.

3. Method as claimed in claim 2,
**characterized in that** after termination of each valve opening signal, the pressure fluid volume that is returned is determined and evaluated for defining the effective area of flow of the inlet valve (3) being calibrated.

4. Method as claimed in claim 2 or 3,
**characterized in that** the valve opening current of the inlet valve (3) being calibrated is increased stepwise or gradually in the consecutive measuring routines.

5. Method as claimed in claim 4,
**characterized in that** the inlet valve (3) undergoing calibration is a normally open valve (NO-valve), to which a closing current in the magnitude of 1800 mA is applied in step a) of the calibration operation, and **in that** a valve opening current (I₁, I₂, I₃, I₄, I₅) reducing the closing current (Iₛ) is applied as a valve opening signal and is increased in each case by a predetermined value of e.g. 10mA in the consecutive measuring routines.

6. Method as claimed in any one or more of claims 1 to 5,
**characterized in that** the hydraulic pressure at the inlet of the inlet valve (3) being calibrated is predetermined by activation of the hydraulic pump (1) until overflow of the separating valve (2) or until response of any other pressure-limiting element.

7. Method as claimed in claim 6,
**characterized in that** the hydraulic pressure at the inlet of the inlet valve (3) undergoing calibration is buffered during a calibration operation by connection of a pressure accumulator circuit.

8. Method as claimed in claim 7,
**characterized in that** in a brake system wherein two or more wheel brakes (A, B) are connected to a brake circuit (I) by way of individual inlet valves (3, 3') and a joint separating valve (2), the pressure accumulator circuit is constituted by opening the pressure fluid conduit to a second wheel brake (B).

9. Method as claimed in any one or more of claims 1 to 8,
**characterized in that** the volume of the returned pressure fluid is determined by monitoring the supply performance of the hydraulic pump (5), in particular the current/voltage variation.

10. Method as claimed in any one or more of claims 1 to 9,
**characterized in that** for determining calibration data, several measured values and/or several measuring routines are taken into consideration for the purpose of improving the accuracy or for a redundant signal evaluation.

## Revendications

1. Procédé pour étalonner la caractéristique courant/ouverture d'une soupape hydraulique à commande électrique et régulation analogique, en particulier d'une soupape d'admission (3), dans un système de frein de véhicule automobile ou système de régulation tel que ABS, ASR, ESP, etc., dans lequel un fluide sous pression est acheminé, par une soupape de séparation (2) et par la soupape d'admission (3) à étalonner, vers un frein de roue (A) et est refoulé, par une soupape d'échappement (4) et une pompe hydraulique à fonctionnement électrique et commande électrique, **caractérisé par** les étapes suivantes :
a) fermeture de la soupape de séparation (2) et de la soupape d'admission (3) à étalonner,
b) constitution d'une différence de pression définie à travers la soupape d'admission (3) à étalonner par commande de la pompe hydraulique (5),
c) commande de la soupape d'admission (3) à étalonner avec un signal d'ouverture de soupape sous la forme d'un courant d'ouverture de soupape prédéfini (I₁, I₂, I₃, I₄, I₅) de durée (Tₚᵤₗₛ) prédéfinie,
d) détermination du volume de fluide sous pression ayant circulé dans le frein de roue (A) à la suite du signal d'ouverture de soupape, par commande de la pompe hydraulique (5) et refoulement du volume de fluide sous pression depuis le frein de roue (A) dans le circuit de freinage et
e) détermination de l'ouverture de passage de la soupape d'admission (3) à étalonner en fonction du signal d'ouverture de soupape respectif par détermination et interprétation du volume de fluide sous pression refoulé.

2. Procédé selon la revendication 1, **caractérisé en ce que** pour déterminer la caractéristique courant/ouverture de la soupape d'admission (3) à étalonner, les étapes a) à e) sont renouvelées en routines de mesure successives avec des signaux d'ouverture de soupape (I₁, I₂, I₃, I₄, I₅) identiques et/ou variables.

3. Procédé selon la revendication 2, **caractérisé en ce qu'**à la fin de chaque signal d'ouverture de soupape, le volume de fluide sous pression refoulé est déterminé et interprété pour déterminer l'ouverture de passage de la soupape d'admission (3) à étalonner.

4. Procédé selon la revendication 2 ou 3, **caractérisé en ce que** dans les routines de mesure successives le courant d'ouverture de soupape de la soupape d'admission (3) à étalonner est augmenté pas à pas ou par degrés.

5. Procédé selon la revendication 4, **caractérisé en ce qu'**on utilise comme soupape d'admission (3) à étalonner une soupape ouverte (soupape FO) lorsqu'elle n'est pas parcourue par un courant qui reçoit, à l'étape a) du processus de calibrage, un courant de fermeture d'un ordre de grandeur de 1 800 mA, et **en ce qu'**on applique comme signal d'ouverture de soupape un courant d'ouverture de soupape (I₁, I₂, I₃, I₄, I₅) réduisant le courant de fermeture (Iₛ), lequel courant d'ouverture de soupape est augmenté d'une valeur prédéfinie de 10 mA par exemple, dans les routines de mesure successives.

6. Procédé selon une ou plusieurs des revendications 1 à 5, **caractérisé en ce que** la pression hydraulique à l'entrée de la soupape d'admission (3) à étalonner est prédéfinie par commande de la pompe hydraulique (1) jusqu'à ce que soit recouverte la soupape de séparation (2) ou jusqu'à l'intervention d'un autre élément limitant la pression.

7. Procédé selon la revendication 6, **caractérisé en ce que** la pression hydraulique à l'entrée de la soupape d'admission (3) à étalonner est tamponnée pendant un processus de calibrage par raccordement d'un circuit d'accumulateur de pression.

8. Procédé selon la revendication 7, **caractérisé en ce que** dans le cas d'un système de frein dans lequel deux freins de roue (A, B) ou plus sont raccordés à un circuit de freinage (I), par des soupapes d'admission (3, 3') individuelles et par une soupape de séparation (2) commune, le circuit d'accumulateur de pression est formé par ouverture de la voie du fluide sous pression vers un second frein de roue (B).

9. Procédé selon une ou plusieurs des revendications 1 à 8, **caractérisé en ce que** le volume du fluide sous pression refoulé est déterminé par observation du comportement au refoulement de la pompe hydraulique (5), en particulier de la courbe courant/tension.

10. Procédé selon une ou plusieurs des revendications 1 à 9, **caractérisé en ce que** pour déterminer les données d'étalonnage plusieurs valeurs de mesure et/ou plusieurs routines de mesure sont prises en compte afin d'améliorer la précision ou pour une interprétation redondante des signaux.
